# EUROPÄISCHE PATENTSCHRIFT

(11) **EP 2 808 653 B1**
(45) Veröffentlichungstag und Bekanntmachung des Hinweises auf die Patenterteilung: **13.07.2016**
(21) Anmeldenummer: 13169411.9
(22) Anmeldetag: 28.05.2013
(51) Int. Cl.: G01D 5/347, G06F 3/03

(54) **Drehwinkelsensor**
Rotation angle sensor
Capteur d´angle de rotation

(43) Veröffentlichungstag der Anmeldung: 03.12.2014
(73) Patentinhaber: SICK STEGMANN GmbH, 78166 Donaueschingen (DE)
(72) Erfinder: Hopp, David, 78166 Donaueschingen (DE)
(74) Vertreter: Hehl, Ulrich

(56) Entgegenhaltungen:
- EP-A1- 1 890 113
- DE-A1-102010 000 732
- US-A1- 2009 152 452
- US-A1- 2010 006 748
- US-B2- 7 697 127

## Beschreibung

Die Erfindung betrifft einen Drehwinkelsensor nach dem Oberbegriff von Anspruch 1.

Derartige Drehwinkelsensoren oder Winkelsensoren sind beispielsweise aus der US 7,697,127 B2 bekannt. Dabei wird von einer Lichtquelle ein drehbar angeordnetes Musterelement beleuchtet. Das Licht der Lichtquelle trifft nach Remission an dem Musterelement auf eine Bildgebungseinheit. Weiter ist eine Winkelbestimmungseinheit vorgesehen zum Bestimmen eines Drehwinkels des Musterglieds mit Bezug auf eine Referenzposition auf der Bildgebungseinheit auf Grundlage einer Phasenverschiebung zwischen einer Phase einer Wellenform, die aus dem projizierten Bild resultiert und einem Referenzphasenwert, der der Referenzposition entspricht, wobei die Wellenform dargestellt wird durch Messwerte der photosensitiven Pixel.

Weiter sind Multiturn-Winkelmessgeräte, beispielsweise aus der DE 102 38 640 B4 bekannt. Diese offenbart ein Multiturn-Winkelmessgerät mit einer ersten Maßverkörperung, welche mit einer Eingangswelle verdrehfest verbunden ist und die mittels einer ersten Abtasteinheit zur Bestimmung der Winkellage der Eingangswelle abgetastet wird, und mit weiteren Maßverkörperungen, die parallel zueinander angeordnete Drehachsen aufweisen zur Messung der Anzahl der Umdrehungen der Eingangswelle, wobei jede Maßverkörperung mittels eines Untersetzungsgetriebes zur jeweils vorgeschalteten Maßverkörperung untersetzt wird und zur Abtastung jeder Maßverkörperung jeweils eine Abtasteinheit auf einer Leiterplatte angeordnet ist, wobei ein mit der Eingangswelle verbundenes Eingangszahnrad vorgesehen ist.

Die US 2009/152452 A1 zeigt in den Figuren 6 bis 9 einen Multiturn-Drehgeber, wobei mehrere Codescheiben vorgesehen sind. Die Codescheiben werden jeweils durch ein Photosensorarray ausgewertet.

Die US 7 697 127 B2 zeigt einen Winkelmesser, wobei eine Codescheibe mit Markierungen auf ein CCD-Array abgebildet wird.

Die EP 1 890 113 A1 zeigt einen optoelektronischen Winkelsensor, wobei eine Codescheibe auf einem Bildsensor abgebildet wird.

Die DE 10 2010 000 732 A1 zeigt einen optischen Multiturn-Reflexionskodierer mit einzelnen Codescheiben und den Codescheiben zugeordneten Lichtdetektoren Arrays.

Die US 2010/006748 A1 zeigt einen Multiturn-Encoder mit jeweils einer Codescheibe pro Achse mit einer Schlitzblende, wobei auf einer Seite ein Bildsensor und auf der anderen Seite der Codescheibe eine Beleuchtung angeordnet ist.

Die Anforderungen an moderne Drehwinkelsensoren steigen stetig. Drehwinkelsensoren sollen preiswerter herstellbar sein. Weiter sollen Drehwinkelsensoren robuster gegenüber thermischen und mechanischen Bedingungen sein. Besonders bei einem Einbau in einem Motor als sogenannter Motorfeedbackgeber sind hohe axiale und radiale mechanische Toleranzen, als auch Kippungen der Motorwelle zu berücksichtigen. Zusätzlich ist zu berücksichtigen, dass die Motorwelle sehr heiß wird, beispielsweise bis zu 150°, so dass eine Drehwinkelmesseinrichtung nahe der Motorwelle auch bezüglich der Materialien entsprechend ausgelegt werden muss.

Die Aufgabe der vorliegenden Erfindung besteht darin, einen kostengünstigen Drehwinkelsensor bereitzustellen, der es erlaubt absolute Positionsangaben anzugeben.

Die vorliegende Aufgabe wird gelöst mit einem Drehwinkelsensor mit einer drehbaren ersten Codescheibe, wenigstens einem ersten Bildsensor und wenigstens einer Optik, welche einen optischen Code der Codescheibe auf den ersten Bildsensor abbildet, wobei mindestens eine zweite drehende Codescheibe vorgesehen ist, welche mit der ersten Codescheibe direkt oder indirekt mit einer Übersetzung drehbar verbunden ist, wobei ein optischer Code der zweiten Codescheibe mittels einer zweiten Optik auf einen zweiten Bildsensor abgebildet wird, wobei eine Lichtquelle ortsfest angeordnet ist und die Codescheiben reflexiv beleuchtet, wobei die Optik und die zweite Optik jeweils eine Abbildungsoptik ist, die Bildsensoren durch einen einzigen Bildsensor gebildet sind, wodurch für alle Codescheiben der gemeinsame Bildsensor vorgesehen ist und vor dem Bildsensor eine Blende angeordnet ist.

Der erfindungsgemäße Drehwinkelsensor bildet gemäß der Erfindung einen Multiturnsensor, welcher aus mindestens zwei kaskadierten absoluten Winkelsensoren besteht, welche in Summe das Erfassen der Anzahl von Umdrehungen, beispielsweise eines Motors ermöglichen. Die einzelnen Codescheiben sind beispielsweise auf diskreten Stufen eines mechanischen Getriebes angeordnet.

Die vorliegende Erfindung hat den Vorteil, dass die Informationsaufnahme durch den Bildsensor sehr robust ist. So wirkt sich eine lateraler Versatz, eine Verkippung oder eine Abstandsänderung bzw. eine Änderung des Abbildungsmaßstabes zwischen Codescheibe und Bildsensor nicht, oder nur sehr gering auf die absolute Drehwinkelmessung aus, da die aufgenommene und ausgewertete Information davon unabhängig identisch ist.

Weiter hat die vorliegende Erfindung den Vorteil, dass diese robust gegenüber einer Änderung von Umgebungslichtintensität, bzw. robust gegenüber einer Umgebungslichtintensitätsverteilung. Je nach Empfindlichkeit des Bildsensors kann auch noch bei sehr wenig Licht, das von der Codescheibe remittiert wird, eine Auswertung durchgeführt werden.

Weiter ist der erfindungsgemäße Drehwinkelsensor robust gegenüber einer Umgebungslichtwellenlänge. Unterschiedliche Wellenlängen des Umgebungslichts, beispielsweise durch Störlicht beinträchtigen die Auswertung nur geringfügig, solange der Kontrast der Codescheibe durch den Bildsensor noch auswertbar ist.

Die Positionierung der Codescheiben ist in Abhängigkeit der Abbildung frei wählbar. Es muss lediglich gewährleistet sein, dass durch den Bildsensor genügend Informationen vorliegen, um die Position der Codescheiben vollständig auswerten zu können.

Durch die Wahl und Auslegung der Optik, bzw. Abbildungsoptik, der Größe der Detektorfläche des Bildsensors und der Größe und Position der Codescheiben ist der Drehwinkelgeber nahezu beliebig skalierbar, wodurch der Drehwinkelsensor für unterschiedlichste Anforderungen ausgelegt werden kann.

Die Winkelauflösung des Drehwinkelsensors ist über die Wahl der Anzahl, der Größe und der Anordnung von Pixeln auf dem Bildsensor einstellbar.

Der Bildsensor besteht minimal aus einer photoempfindlichen Fläche, die in diskrete Einzeldetektoren segmentiert ist. Bevorzugt handelt es sich um ein Array. Der Bildsensor besteht beispielsweise aus einem CCD- oder CMOS-Array. Dem Bildsensor ist die Optik vorgelagert, um den Code der Codescheibe möglichst scharf, d. h. fokussiert auf den Bildsensor abzubilden. Weiter ist vor dem Bildsensor eine Blende angeordnet. Wird die Blende klein gewählt, wird eine hohe Schärfentiefe erreicht, wodurch eine Unempfindlichkeit gegenüber einer Abstandsänderung zwischen Codescheibe und Kamera erreicht wird.

Die Winkelinformation ist vorzugsweise binär auf der Codescheibe aufgebracht. Dies kann z. B. in Form von schwarzen und weißen Flächensegmenten bzw. transparenten und nicht transparenten Flächensegmenten geschehen.

Das Abbild der Codescheibe auf dem Bildsensor unterliegt einer Skalierung, nämlich in Abhängigkeit des Abbildungsmaßstabes sowie einer eventuellen Verzeichnung oder Verkippung. Dies bedeutet, dass die Codierung bzw. Winkelcodierung derart ausgelegt werden muss, dass trotz all dieser Einflussfaktoren dennoch eine ausreichende Winkelauswertung möglich ist. Eine bevorzugte Codescheibe hierfür besitzt eine Winkelcodierung in Form einer optischen Kante, d. h. die Fläche der Codescheibe ist hälftig in eine schwarze und eine weiße Hälfte geteilt. Diese Teilung kann mittig durch das Drehzentrum der Codescheibe oder aber auch außermittig verlaufen. Eine äußere Begrenzung der Codescheibe ist dabei beliebig. Auf den Bildsensor wird lediglich die sich drehende Kante, also der Teil der Codescheibe mit dem Hell-Dunkelübergang abgebildet, bzw. ein Ausschnitt der Codescheibe, welcher diese Kante bzw. den Hell-Dunkelübergang beinhaltet.

Die Kante bzw. die Kanten auf der Codescheibe brauchen nicht gerade sein. So ist denkbar, dass eine geknickte Kante vorgesehen ist oder auch anders geformte Kanten, beispielsweise gebogen oder gewellt. Es können beispielsweise zwei oder mehr Kanten auf der Codescheibe implementiert werden.

Die Abbildung erfolgt bevorzugt fokussiert, d. h. scharf. Die Funktion ist jedoch auch bei defokussierter Abbildung gegeben, wenn eine Binarisierung der Informationen auf der Codescheibe oder eine beliebige andere geeignete Filterung des Bildes erfolgt.

Eine Winkelauswertung erfolgt durch eine Auswerteeinheit mittels einer Kantendetektion, beispielsweise einem Sobelfilter, Cannyfilter oder ähnlichen wirksamen Filter, oder lediglich durch eine richtungsabhängige Differentiation. Dies ist idealerweise in beiden lateralen Raumrichtungen x und y des Bildsensors vorgesehen. Der Drehwinkel der Kante und damit die Winkelposition der Codescheibe wird über eine Ermittlung der Kantensteigung durchgeführt. Da diese Information alleine noch kein eindeutiges Winkelsignal liefert, wird zusätzlich die absolute Winkellage der Kante ermittelt. Dies kann z. B. über eine weitere Differentiation der Kante oder auch über die Ermittlung der Helligkeitswerte und/oder deren Differenz auf beiden Seiten der Kante erfolgen.

Die Auswerteeinheit liefert damit ein eindeutiges und absolutes Winkelsignal in Abhängigkeit der Codescheibendrehung. Da dies lediglich anhand der Winkelposition einer Kante geschieht, ist das System robust gegen sämtliche mechanische Toleranzen.

Einzige Bedingung für die korrekte Funktion ist die Abbildung eines Teils der Kante auf die Detektoroberfläche.

Die Winkelauflösung des Drehwinkelsensors ist direkt und ausschließlich abhängig von der lateralen Pixelauflösung, d. h der Pixelanzahl, Pixelgröße und Pixelanordnung des Bildsensors, sowie der dazu relativen Länge der abgebildeten Kante.

Beispielsweise können zusätzliche Informationen auf der Codescheibe aufgebracht sein, um den Abstand der Codescheibe zu ermitteln oder um den Abbildungsmaßstab zu ermitteln. Beispielsweise können ringförmige oder rechteckige Markierungen auf der Codescheibe angeordnet sein.

Die Codescheiben können beispielsweise 16 Winkelzustände bei einer Codierung von 4 Bit aufgelöst werden. Bei einer Kaskadierung von 2 Codescheiben können dadurch 256 Zustände der Codescheiben unterschieden werden.

Die Codescheibe kann zur Codierung der Winkelinformation beispielsweise Felder mit unterschiedlichen Graustufen aufweisen. Weiter ist es auch vorgesehen, unterschiedliche Farben auf einer Codescheibe vorzusehen zur Codierung der Winkelinformation. Dabei können die Kanten scharf oder unscharf ausgelegt sein, d. h. der Übergang zwischen zwei verschiedenen hellen und/oder verschiedenfarbigen Bereichen kann abrupt oder kontinuierlich fließend ausgebildet sein. Der Bildsensor ist je nach Codescheibe dazu ausgebildet, binäre Bilder, Graustufenbilder oder farbige Bilder, beispielsweise RGB-Bilder aufzunehmen.

Weiter können auch auf unterschiedlichen Codescheiben unterschiedliche Farben vorgesehen werden, um die Codescheiben besser unterscheiden zu können.

Der erfindungsgemäße Drehwinkelsensor kann unterschiedlich ausgebildet sein. Entweder der gesamte Sensor wird entsprechend den hohen Temperaturen und Toleranzen ausgelegt oder es wird eine sogenannte Kit-Lösung gewählt, welche eine mechanische und räumliche Trennung von ortsfester Bildsensor-Einheit und drehender Codescheibe vorsieht.

Bei einer Kit-Lösung entfällt eine Lagerung der Sensorkomponenten, da die Motorwelle bereits kugelgelagert ist. Lediglich die elektronisch passive Codescheibe ist der hohen Temperaturbelastung ausgesetzt. Die elektronischen Komponenten hingegen sind von der Motorwelle räumlich und thermisch getrennt, so dass die Temperatur der Motorwelle kaum Auswirkungen auf den Bildsensor und die nachfolgende Auswerteeinheit hat.

Gemäß der Erfindung hat der erfindungsgemäße Drehwinkelsensor den Vorteil, dass nur ein einziger Bildsensor vorgesehen ist, wodurch eine einfache Auswertung mit nur einer einzigen Auswerteinheit notwendig ist, da alle notwendigen Informationen in den Bildinformationen des einzigen Bildsensors enthalten sind.

In Weiterbildung der Erfindung sind weitere Codescheiben vorgesehen, die jeweils mit einer vorhergehenden Codescheibe mit einer Übersetzung drehbar verbunden sind.

Dadurch ist der gebildete Drehwinkelsensor in der Lage, eine größere Anzahl von Umdrehungen zu zählen. Sind beispielsweise drei Codescheiben vorgesehen, wobei jede eine Codierung von 4 Bit/16 Zustände aufweist, können mit dieser Kaskade 4096 Zustände unterschieden werden. Jedoch können auch andere Winkelauflösungen vorgesehen werden.

In Weiterbildung der Erfindung ist eine Lichtquelle ortsfest angeordnet, welche die Codescheiben beleuchtet. Hierbei kann nahezu jede beliebige Lichtquelle eingesetzt werden.

Die Codescheiben werden von der Lichtquelle reflexiv beleuchtet, so dass das Licht nach Reflexion von der Codescheibe die dort codierte Winkelinformation trägt. Da die Codescheibe das Licht idealerweise streut, kann die Lichtquelle beliebig positioniert werden. Es genügt auch eine indirekte Beleuchtung, sofern die Codescheibe vollständig ausgeleuchtet wird und Licht in Richtung des Bildsensors fällt.

Gemäß einer weiteren Ausführung sind die Optiken durch eine einzige Optik gebildet, wodurch für alle Codescheiben die gemeinsame Optik vorgesehen ist.

Dadurch wird der Drehwinkelsensor kostengünstiger, da nur eine gemeinsame Optik vorgesehen werden muss. Dadurch kann der Drehwinkelsensor auch kompakter hergestellt werden. Bei der Optik handelt es sich beispielsweise um ein Objektiv aus mehreren Linsen.

In Weiterbildung der Erfindung ist die Optik refraktiv, diffraktiv oder reflexiv ausgebildet. Eine refraktive Optik ist einfach herzustellen und kostengünstig. Beispielsweise kann die refraktive Optik aus Kunststoff im Spritzgussverfahren hergestellt werden. Jedoch kann die refraktive Optik auch aus Glas hergestellt sein. Glas hat den Vorteil, dass die Optik auch bei extremen Temperaturen von beispielsweise bis zu 150° eingesetzt werden kann.

Diffraktive Optiken können sehr klein und damit platzsparend ausgebildet sein. Dadurch kann der Drehwinkelsensor sehr kompakt ausgebildet werden. Eine reflexive Optik kann beispielsweise dann zum Einsatz kommen, wenn eine Strahlumlenkung gewünscht ist, um beispielsweise eine vorteilhafte geometrische Anordnung zu realisieren, bei der Optik und der Bildsensor nicht auf einer geraden optischen Achse liegen. Eine reflexive Optik kann aber auch sinnvoll eingesetzt werden ohne die optische Achse umzulenken, beispielsweise bei Teleskopobjektiven.

In Weiterbildung der Erfindung sendet die Lichtquelle kohärentes, inkohärentes oder teilkohärentes Licht aus. Beispielsweise lässt sich durch einen Laser ein kohärentes Licht erzeugen. Dadurch ist das Licht der Lichtquelle eindeutig der Lichtquelle zuordenbar und kann von Fremdlicht unterschieden werden. Der Drehwinkelsensor wird dadurch unempfindlicher gegen Fremdlichteinflüsse. Beispielsweise kann das Licht zeitlich gepulst werden, um eine Fremdlichtausblendung zu gewährleisten.

In Weiterbildung ist die Lichtquelle schmalbandig oder breitbandig bezüglich der ausgesendeten Wellenlänge. Im Falle einer schmalbandigen Lichtquelle kann wiederum Fremdlicht gut unterdrückt werden, da die schmalbandige Wellenlänge der Lichtquelle bekannt ist. Eine breitbandige Lichtquelle hat den Vorteil, dass eine günstigere Lichtquelle eingesetzt werden kann.

In Weiterbildung der Erfindung ist der Lichtquelle eine Strahlformungsoptik nachgelagert, welche refraktiv, diffraktiv oder reflexiv ausgebildet ist. Durch die Strahlformungsoptik kann die Richtung der Lichtstrahlen der Lichtquelle gerichtet werden, so dass eine effiziente und wirkungsvolle Ausleuchtung der Codescheibe erreicht wird. Eine refraktive Optik ist einfach und kostengünstig herstellbar, wobei eine präzise Beleuchtung erreicht werden kann. Eine diffraktive Optik kann sehr kompakt hergestellt werden, so dass der Drehwinkelsensor sehr kompakt ausgebildet werden kann. Eine reflexive Strahlformungsoptik erlaubt eine Strahlumlenkung, wodurch die Lichtquelle unterschiedlich platziert werden kann.

Der erfindungsgemäße Drehwinkelsensor kann für die Drehwinkelmessung an Motoren eingesetzt werden.

Der erfindungsgemäße Drehwinkelsensor kann auch mit anderen optischen Messprinzipien, beispielsweise dem Polarisationsencoderprinzip kombiniert werden. Weiter ist der erfindungsgemäße Drehwinkelsensor mit nicht optischen Messprinzipien, wie magnetischen Messprinzipien, kombinierbar. Bei einer Kombination von Codescheiben gemäß vorliegender Erfindung mit anderen optischen Messprinzipien, oder einer Kombination mit nicht optischen Messprinzipien kann auch eine redundante und/oder diversitäre Auswertung der Drehbewegung erreicht werden, da sich die Messprinzipien unterscheiden. Dadurch kann gemäß der Erfindung ein Sicherheits-Drehwinkelsensor gebildet werden, der in sicherheitskritischen Anwendungen gemäß der Maschinensicherheit zum Einsatz kommt.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: einen erfindungsgemäßen Drehwinkelsensor;
- Figur 2: einen Drehwinkelsensor mit Beleuchtung;
- Figur 3: einen Drehwinkelsensor mit gekippter optischer Achse und Beleuchtung;
- Figur 4: eine kreisförmige Codescheibe mit einer Kante entlang eines Durchmessers;
- Figur 5: eine kreisförmige Codescheibe mit einer exzentrischen Kante;
- Figur 6: eine kreisförmige Codescheibe mit drei Kanten;
- Figur 7: eine kreisförmige Codescheibe mit fünf Kanten;
- Figur 8: eine kreisförmige Codescheibe mit kreisbogenförmigen Codes bei unterschiedlichen Durchmessern oder drei hintereinander angeordnete Codescheiben;
- Figur 9: einen Drehwinkelsensor mit drei Codescheiben und jeweils einer zugeordneten Optik und jeweils einem zugeordneten Bildsensor;
- Figur 10: drei diskrete Bilder der Bildsensoren gemäß Figur 9;
- Figur 11: drei diskrete Bilder der Bildsensoren gemäß Figur 9;
- Figur 12: einen Drehwinkelsensor mit drei Codescheiben, einer einzigen Optik und einem einzigen Bildsensor;
- Figur 13: eine Abbildung der drei Codescheiben gemäß Figur 12 mit einem einzigen Bildsensor;
- Figur 14: eine Abbildung der drei Codescheiben gemäß Figur 12 mit einem einzigen Bildsensor;
- Figur 15: einen Drehwinkelsensor mit drei Codescheiben, jeweils drei Optiken und einem gemeinsamen einzigen Bildsensor;
- Figur 16: einen Drehwinkelsensor mit drei verkippten Optiken mit erfüllter Scheimpflugbedingung;
- Figur 17: einen Drehwinkelsensor mit Codescheiben auf einem Multiturngetriebe;
- Figur 18: ein schematisches Flussdiagramm zur Bildverarbeitung.

In den nachfolgenden Figuren sind identische Teile mit identischen Bezugszeichen versehen.

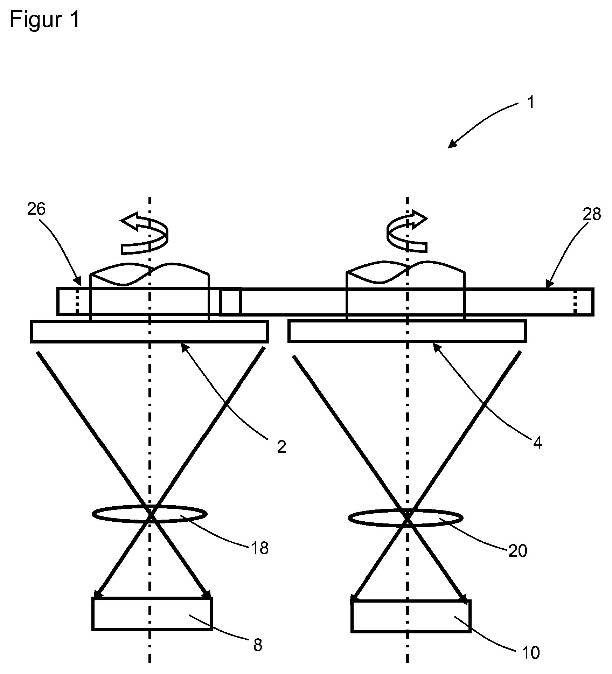

Figur 1 zeigt einen Drehwinkelsensor 1 mit einer drehbaren ersten Codescheibe 2, wenigstens einem ersten Bildsensor 8 und wenigstens einer Optik 18, welche einen optischen Code 14 der Codescheibe 2 auf den ersten Bildsensor 8 abbildet, wobei mindestens eine zweite drehende Codescheibe 4 vorgesehen ist, welche mit der ersten Codescheibe 2 direkt oder indirekt mit einer Übersetzung, beispielsweise bestehend aus dem ersten Zahnrad 26 und dem zweiten Zahnrad 28, drehbar verbunden ist, wobei ein optischer Code der zweiten Codescheibe 4 mittels einer zweiten Optik 20 auf einen zweiten Bildsensor 10 abgebildet wird.

Der Bildsensor 8 besteht minimal aus einer photoempfindlichen Fläche, die in diskrete Einzeldetektoren segmentiert ist. Bevorzugt handelt es sich um ein CCD-Array oder ein CMOS-Array. Wird für den Bildsensor 8 eine kleine Blende gewählt, kann eine hohe Schärfentiefe gewährleistet werden, was zu einer Unempfindlichkeit gegenüber Abstandsänderungen zwischen Codescheibe und Kamera führt.

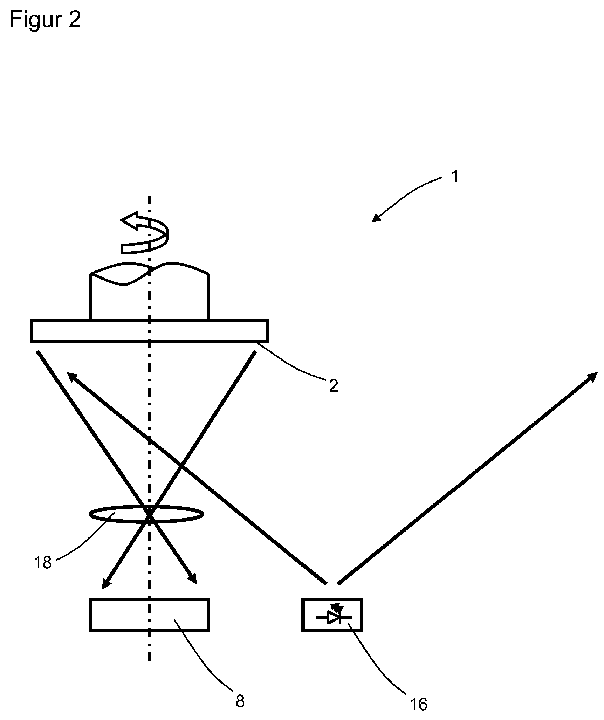

Figur 2 zeigt eine Lichtquelle 16 zum Beleuchten der Codescheiben, wobei in dieser Figur nur eine Codescheibe 2 dargestellt ist mit einer Optik 18. Die Lichtquelle 16 kann kohärentes, inkohärentes oder teilkohärentes Licht aussenden. Weiter kann die Lichtquelle 16 schmalbandig oder breitbandig bezüglich der ausgesendeten Wellenlänge ausgebildet sein. Nicht dargestellt ist eine gegebenenfalls vorgesehene Strahlformungsoptik nach der Lichtquelle 16, um das Licht auf die Codescheiben zu bündeln und zu richten. Die Strahlformungsoptik kann refraktiv, diffraktiv oder reflexiv ausgebildet sein. Die Lichtquelle 16 ist gemäß Figur 2 neben dem Bildsensor 8 positioniert. Die Codescheibe 2 wird von der Lichtquelle 16 transmissiv oder reflexiv beleuchtet, so dass das Licht nach Transmission und/oder Reflexion von der Codescheibe 2 die dort codierte Winkelinformation trägt. Da die Codescheibe 2 das Licht idealerweise streut, kann die Lichtquelle 16 beliebig positioniert werden. Es genügt auch eine indirekte Beleuchtung, sofern die Codescheibe 2 vollständig ausgeleuchtet wird und das Licht in Richtung des Bildsensors 8 oder der Kamera gestreut wird. Die Lichtquelle 16 kann im Dauerbetrieb genutzt oder gepulst betrieben werden. Es können auch mehrere Lichtquellen 16 mit unterschiedlichen Eigenschaften, wie beispielsweise unterschiedlicher Wellenlänge, Bandbreite, Helligkeit oder Abstrahlcharakteristik verwendet werden.

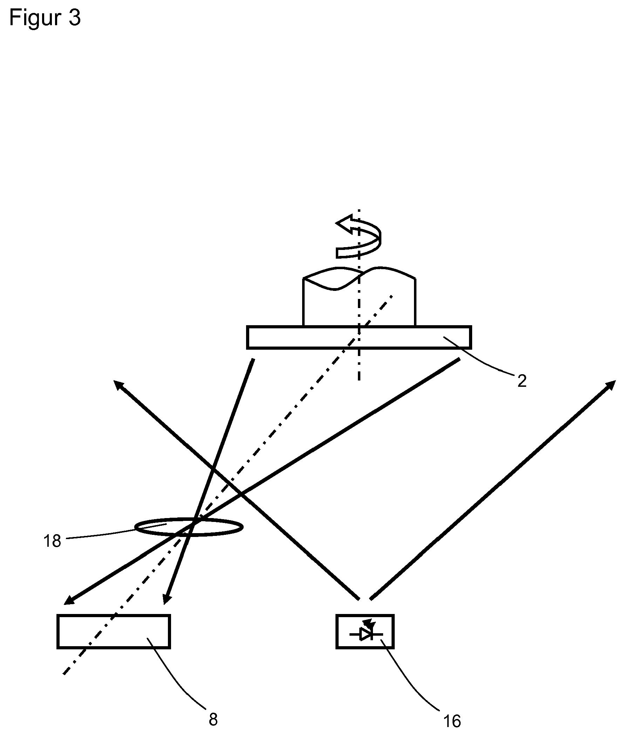

Gemäß der Darstellung in Figur 3 ist die optische Achse zwischen Bildsensor 8 und Codescheibe 2 gekippt. D. h. die optische Achse von Bildsensor 8 und die Drehachse der Codescheiben sind gegeneinander parallel verschoben oder auch zueinander gekippt. Die optische Achse zwischen dem Bildsensor 8 und der Codescheibe 2 ist gegenüber der Drehachse der Codescheibe 2 gekippt. Der Bildsensor 8 muss daher vorteilhaft nicht frontal direkt vor der Codescheibe 2 angeordnet werden. Dadurch kann eine günstige geometrische Konstruktion gewählt werden. Beispielsweise können mehrere Codescheiben von einem Bildsensor 8 eingesehen werden. Weiter kann beispielsweise eine Lichtquelle 16 auf einer Drehachse der Codescheibe 2 angeordnet werden, so dass die Lichtquelle 16 die Codescheibe 2 frontal beleuchtet. Vor dem Bildsensor 8 ist eine Optik 18 vorgesehen.

Das Abbild der Codescheibe 2 auf dem Bildsensor 8 unterliegt einer Skalierung, in Abhängigkeit des Abbildungsmaßstabes, sowie einer eventuellen Verzeichnung oder Verkippung. Dies bedeutet, dass die Winkelkodierung auf der Codescheibe 2 derart ausgelegt werden muss, dass trotz all dieser Einflussfaktoren dennoch eine ausreichende Winkelauswertung möglich ist.

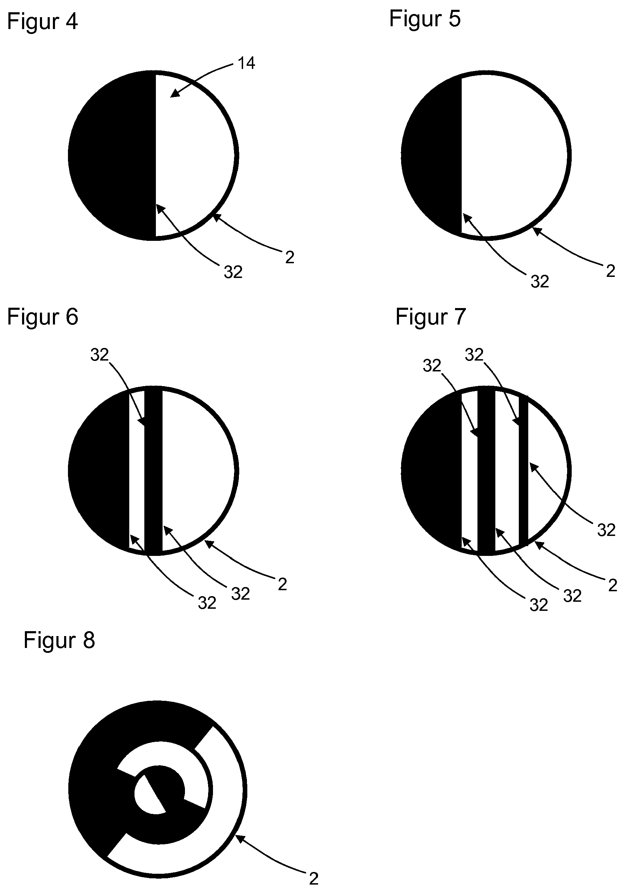

Figur 4 zeigt eine kreisförmige Codescheibe 2 mit einer Kante 32 entlang eines Durchmessers der Codescheibe 2. Die Kante 32 wird durch ein schwarzes bzw. dunkles Feld und ein direkt benachbartes weißes bzw. helles Feld erzeugt, wodurch ein optischer Code 14 gebildet ist. Dies ist der Fall einer idealen Codescheibe für den Drehwinkelsensor, da die Kante 32 die Codescheibe in exakt zwei Hälften teilt und somit eine symmetrische Kante auf der Codescheibe 2 vorhanden ist. Die Winkelinformation ist dadurch idealerweise binär auf der Codescheibe 2 hinterlegt. Neben hellen und dunklen Feldern können auch transparente und nicht transparente Flächensegmente auf der Codescheibe angeordnet sein, die dann vor einem unterschiedlichen Hintergrund von dem Bildsensor erfasst werden. Weiter sind für die Erzeugung der Kante 32 auch Graustufen oder unterschiedliche Farben denkbar. Weiter kann auch die Kante 32 scharf oder auch unscharf ausgelegt sein, d. h. der Übergang zwischen zwei verschieden hellen und/oder verschiedenfarbigen Bereichen kann abrupt oder kontinuierlich gestaltet sein. Die Abbildung der Kante 32 erfolgt vorzugsweise fokussiert, d. h. scharf auf dem Bildsensor. Die Funktion ist jedoch auch bei defokussierter Abbildung gegeben, wenn eine Binarisierung oder eine beliebig andere geeignete Filterung des Bildes erfolgt.

Auf der Codescheibe 2 können auch zusätzliche Informationen zur Ermittlung des Codescheibenabstandes bzw. des Abbildungsmaßstabes implementiert sein, wie beispielsweise Ringe, rechteckige Marker oder andere Maßstäbe.

Der Bildsensor ist ausgebildet, binäre Bilder, Graustufenbilder oder farbige Bilder, beispielsweise RGB-Bilder aufzunehmen.

Figur 5 zeigt eine Codescheibe 2 für den Drehwinkelsensor mit einer exzentrischen Kante 32, die nicht auf dem Durchmesser der Codescheibe 2 liegt. Auch eine solche Codescheibe 2 kann in dem erfindungsgemäßen Drehwinkelsensor eingesetzt werden. Die Kante 32 ist wiederum durch ein helles und dunkles Feld erzeugt.

Figur 6 zeigt eine Codescheibe 2 mit mehreren Kanten 32, insbesondere mit drei Kanten 32, welche durch mehrere helle und dunkle Felder entstehen die abwechselnd angeordnet sind. Das Vorsehen von mehreren Kanten 32 auf der Codescheibe 2 ermöglicht eine eindeutigere Zuordnung und Erkennung der Codescheibe 2 durch den Bildsensor und die nachgeschaltete Auswerteeinheit. Die Kante 32, bzw. die Kanten 32 können auch einen oder mehrere Knicke oder Richtungsänderungen aufweisen oder auch anders geformt sein, beispielsweise gebogen sein.

Figur 7 zeigt ebenfalls eine Codescheibe 2 mit mehreren Kanten, insbesondere mit fünf Kanten 32, welche durch mehrere helle und dunkle Felder bzw. Streifen gebildet sind.

Figur 8 zeigt eine Codescheibe 2 mit drei 'gestapelten' Codescheiben unterschiedlicher Durchmesser. Die Codescheibe 2 weist kreisbogenförmige helle und dunkle Felder auf mit unterschiedlichen Durchmessern, so dass Kantenabschnitte bei unterschiedlichen Durchmessern entstehen. Auch dadurch kann die Zuordnung und Erkennung der Codescheibe 2 verbessert werden. Weiter ist es gemäß Figur 8 auch vorgesehen, unterschiedliche Codescheiben mit unterschiedlichen Durchmessern hintereinander anzuordnen, so dass sich diese überlappen. Dadurch können die Codescheiben beispielsweise sehr gut auf einen einzigen Bildsensor abgebildet werden.

Der erfindungsgemäße Drehwinkelsensor liefert damit ein eindeutiges und absolutes Winkelsignal in Abhängigkeit der Codescheibendrehung. Da dies lediglich anhand einer Winkelposition einer Kante 32 geschieht, ist der Drehwinkelsensor robust gegenüber mechanischen Toleranzen. Einzige Bedingung für die korrekte Funktion ist die Abbildung eines Teils der Kante auf dem Bildsensor. Die Winkelauflösung des Drehwinkelsensors ist direkt und ausschließlich abhängig von der lateralen Pixelauflösung, d. h. der Pixelanzahl, Größe und Anordnung des Bildsensors sowie der dazu relativen Länge der abgebildeten Kante.

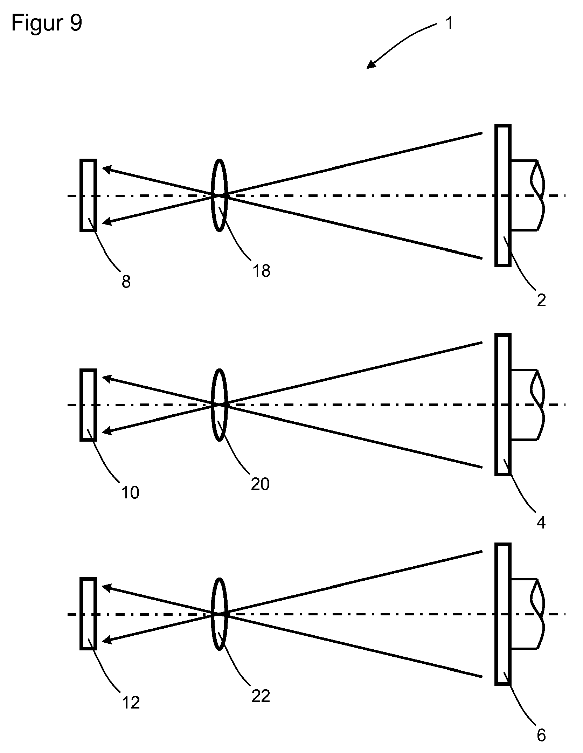

Figur 9 zeigt einen Drehwinkelsensor 1 mit drei Codescheiben 2, 4, 6 und jeweils einer zugeordneten Optik 18, 20, 22 und jeweils einem zugeordneten Bildsensor 8, 10, 12. Die Einzeloptiken 18, 20, 22 können auch einstückig als monolithisches Bauteil zusammengefasst und als Spritzgussoptik hergestellt sein. Die Codescheiben 2, 4, 6 sind mit einer Getriebestufe miteinander verbunden und bilden einen Multiturn-Drehwinkelsensor. Die Codescheiben 2, 4, 6 sind mit einer Getriebeübersetzung kaskadiert miteinander verbunden, so dass eine volle Umdrehung bei einer ersten Codescheibe 2 nur zur einer kleinen Winkelveränderung der zweiten Codescheibe 4 führt usw. Beispielsweise führen 16 Umdrehungen einer ersten Codescheibe 2 zu einer vollständigen Umdrehung einer zweiten Codescheibe 4 usw., so dass mit zwei Codescheiben 256 Umdrehungen und mit drei Codescheiben 4096 Umdrehungen usw. eindeutig gezählt werden können. Andere Übersetzungsverhältnisse sind natürlich von der Erfindung mit umfasst.

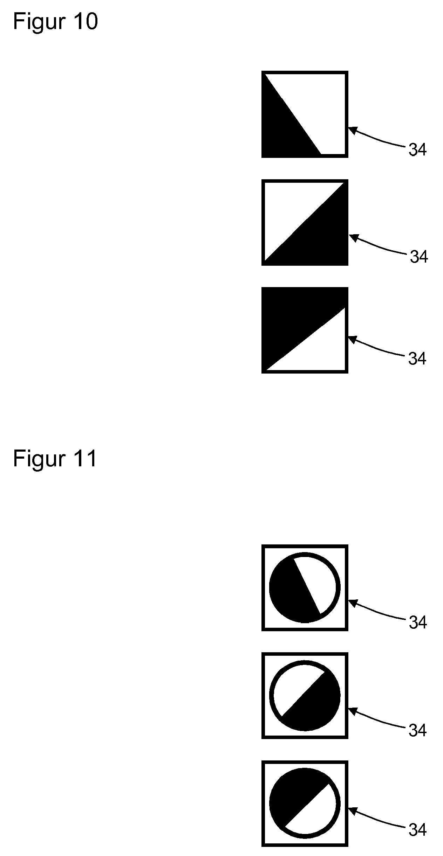

Figur 10 zeigt drei diskrete Bilder 34 der Bildsensoren 8, 10, 12 gemäß Figur 9. Gemäß Figur 9 ist dabei nur ein Ausschnitt der Codescheibe 2, 4, 6 von den Bildsensoren 8, 10, 12 abgebildet und dargestellt. Gemäß der Erfindung reicht es nämlich aus, wenn lediglich die Kante der Codescheiben von den Bildsensoren abgebildet wird und von einer Auswerteeinheit ausgewertet wird. Dabei wird von den jeweiligen Bildsensoren die räumliche Lage der Kante erfasst und durch eine Auswerteeinheit ausgewertet. Aufgrund der drei aufgenommenen Bilder kann die Anzahl der Umdrehungen und die genaue Position des Drehwinkelsensors einfach und schnell erfasst werden. Durch die Bildsensoren erfolgt die Erfassung auch berührungslos und räumlich getrennt von den Codescheiben. So kann beispielsweise eine thermische Isolierung oder eine galvanische Trennung zwischen dem Bildsensor und der Codescheibe realisiert werden.

Figur 11 zeigt drei diskrete Bilder 34 der Bildsensoren gemäß Figur 9, wobei die Codescheibe komplett abgebildet wird. Wie bereits zu Figur 10 erläutert, werden die Kanten auf den Codescheiben auf dem Bildsensor oder auf den Bildsensoren abgebildet und ausgewertet, um die exakte Position und die Anzahl der Umdrehungen zu erfassen.

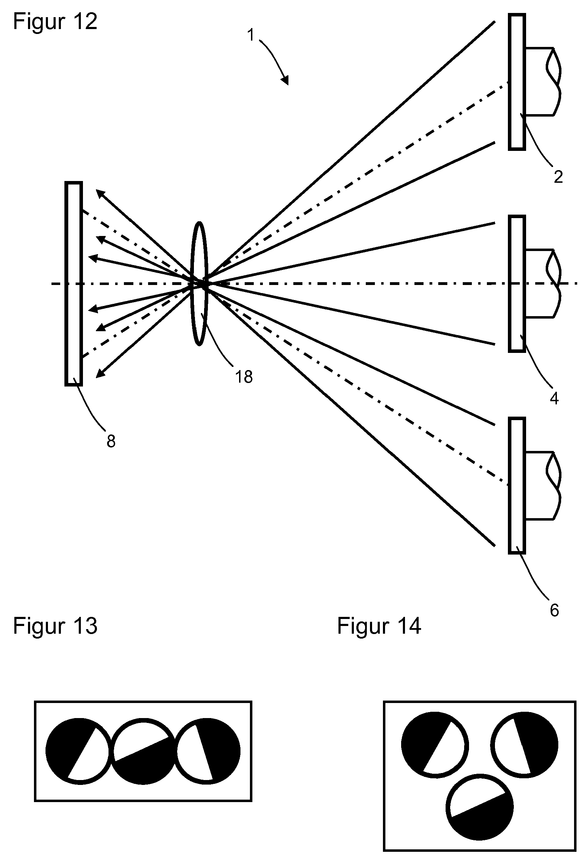

Figur 12 zeigt einen Drehwinkelsensor 1 mit drei Codescheiben 2, 4, 6, einer einzigen Optik 18 und einem einzigen Bildsensor 8. Durch die Verwendung von nur einer einzigen Optik 18 und nur einem einzigen Bildsensor 8 für mehrere Codescheiben 2, 4, 6 kann der Drehwinkelsensor 1 vereinfacht werden. Alle drei Codescheiben 2, 4, 6 werden auf den einzigen Bildsensor 8 abgebildet und durch eine Auswerteeinheit ausgewertet.

Figur 13 zeigt eine Abbildung der drei Codescheiben gemäß Figur 12 mit einem einzigen Bildsensor. Dabei sind die Codescheiben vollständig von dem Bildsensor erfasst und auch direkt nebeneinander angeordnet.

Figur 14 zeigt eine Abbildung der drei Codescheiben gemäß Figur 12 mit einem einzigen Bildsensor, wobei die drei Codescheiben nicht direkt nebeneinander liegen, sondern versetzt zueinander. Gemäß den Figuren 13 und 14 können die Codescheiben daher beliebig angeordnet werden und dennoch von einem Bildsensor gemeinsam abgebildet werden.

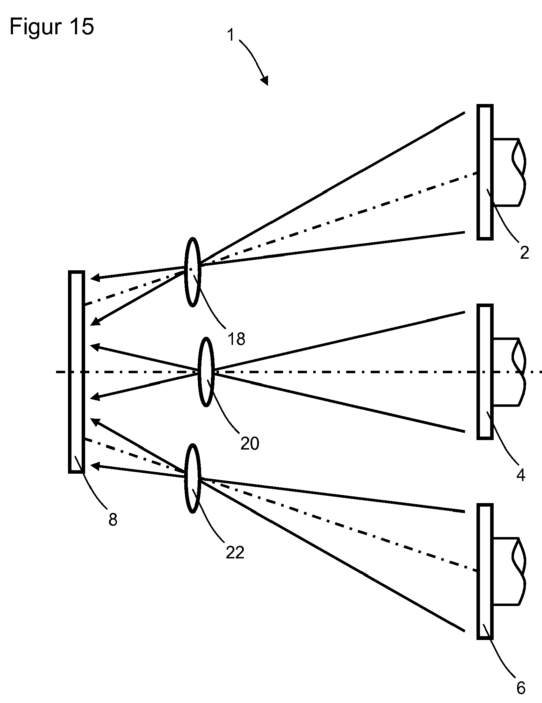

Figur 15 zeigt einen Drehwinkelsensor 1 mit drei Codescheiben 2, 4, 6, jeweils drei Optiken 18, 20, 22 und einem gemeinsamen einzigen Bildsensor 8. Im Unterschied zu Figur 12 ist bei Figur 15 jeder Codescheibe 2, 4, 6 eine eigene Optik 18, 20, 22 zugeordnet. Dadurch kann jede einzelne Codescheibe 2, 4, 6 optimal auf den Bildsensor 8 abgebildet werden. Die einzelnen Optiken 18, 20, 22 können dabei auch kleiner ausgebildet werden als bei einer gemeinsamen Optik, wodurch der Drehwinkelsensor 1 kompakter ausgebildet ist.

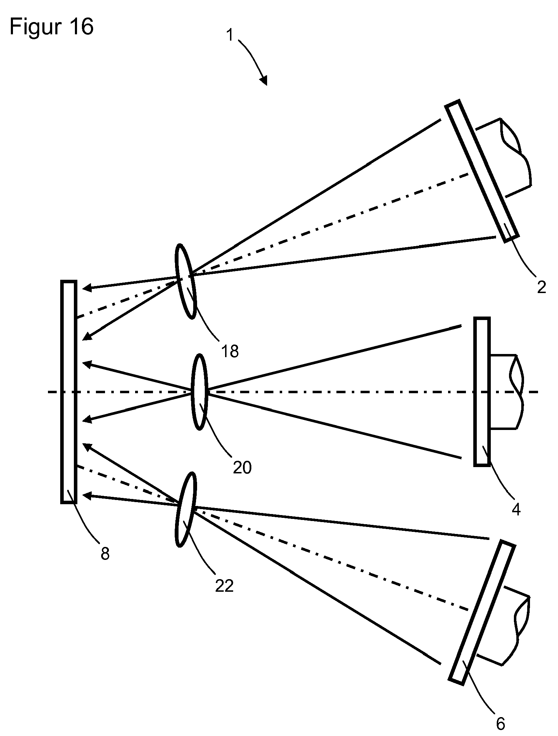

Figur 16 zeigt einen Drehwinkelsensor mit drei verkippten Optiken 18, 20, 22 mit erfüllter Scheimpflugbedingung, wonach die Codescheiben 2, 4, 6 mit einer maximalen Schärfe abgebildet werden. Durch die Verwendung von getrennten Optiken 18, 20, 22 für jede Codescheibe 2, 4, 6 können somit auch gegeneinander verkippte Codescheiben optimal auf den Bildsensor 8 abgebildet werden.

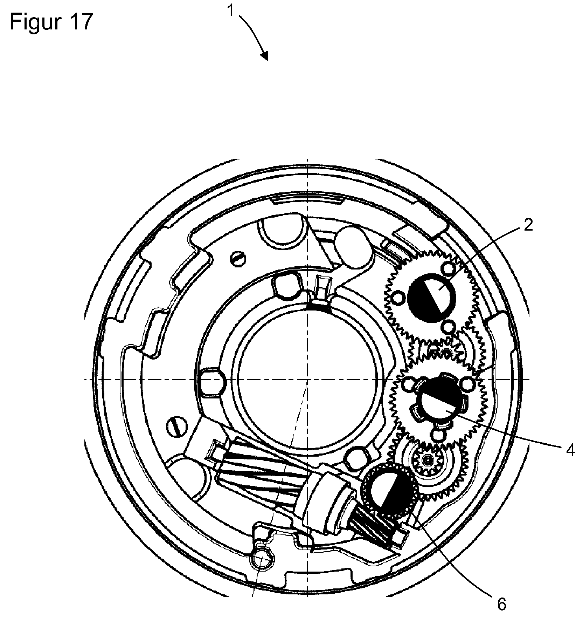

Figur 17 zeigt einen erfindungsgemäßen Drehwinkelsensor 1 mit Codescheiben 2, 4, 6 auf einem Multiturngetriebe. Die Codescheiben 2, 4, 6 sind über eine Getriebestufe übersetzt, so dass eine Vielzahl von Umdrehungen registriert werden können und ein absolut messender Drehwinkelsensor gebildet wird.

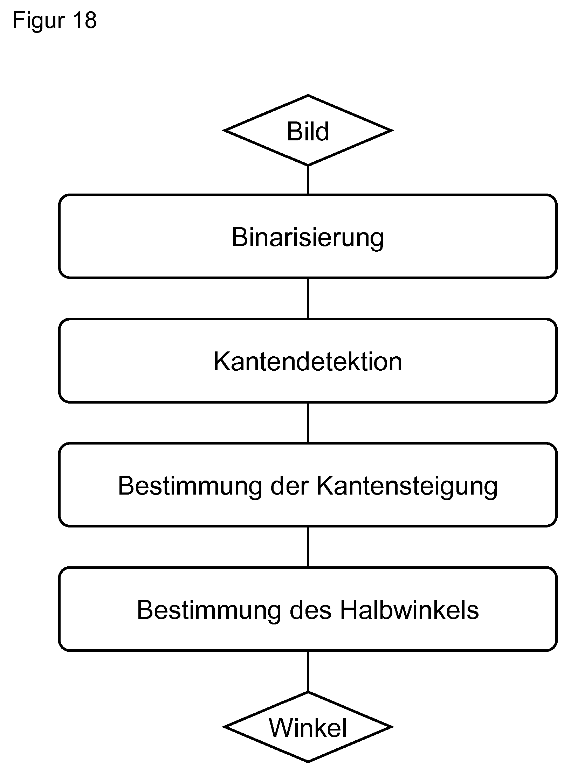

Figur 18 zeigt ein schematisches Flussdiagramm zur Bildverarbeitung. Gemäß dem Flussdiagramm wird das Bild der Codescheibe durch den Bildsensor erfasst und durch eine Auswerteeinheit ausgewertet.

Dabei wird das Bild von der Auswerteeinheit in einem ersten Schritt binarisiert. Auf Grundlage des binären Bildes wird in einem zweiten Schritt eine Kantendetektion durchgeführt. Die Winkelauswertung erfolgt durch eine klassische Kantendetektion, z. B. durch ein Sobelfilter, ein Cannyfilter usw., oder lediglich durch eine richtungsabhängige Differentiation, idealerweise in beiden lateralen Raumrichtungen des Detektorarrays.

In dritten Schritt wird eine Kantensteigung bestimmt, wodurch der Drehwinkel der Kante und damit die Winkelposition der Codescheibe ermittelt wird. Da diese Information alleine noch kein eindeutiges Winkelsignal liefert, wird zusätzlich die absolute Winkellage der Kante ermittelt, also der Halbwinkel bestimmt. Dies kann z. B. über eine weitere Differentiation der Kante oder auch über die Ermittlung der Helligkeitswerte und/oder deren Differenz auf beiden Seiten der Kante erfolgen.

### Bezugszeichen:

1 Drehwinkelsensor
2 Codescheibe, erste Codescheibe
4 zweite Codescheibe
6 dritte Codescheibe
8 Bildsensor, erster Bildsensor
10 zweiter Bildsensor
12 dritter Bildsensor
14 optischer Code
16 Lichtquelle
18 Optik, erste Optik
20 zweite Optik
22 dritte Optik
24 Strahlformungsoptik
26 erstes Zahnrad
28 zweites Zahnrad
30 Zahnräder
32 Kante, Kanten
34 Bilder

## Patentansprüche

1. Drehwinkelsensor mit einer drehbaren ersten Codescheibe (2), wenigstens einem ersten Bildsensor (8) und wenigstens einer Optik (18), welche einen optischen Code (14) der Codescheibe (2) auf den ersten Bildsensor (8) abbildet, wobei mindestens eine zweite drehende Codescheibe (4) vorgesehen ist, welche mit der ersten Codescheibe (2) direkt oder indirekt mit einer Übersetzung drehbar verbunden ist, wobei ein optischer Code (14) der zweiten Codescheibe (4) mittels einer zweiten Optik (20) auf einen zweiten Bildsensor (10) abgebildet wird, wobei eine Lichtquelle (16) ortsfest angeordnet ist und die Codescheiben (2, 4, 6) reflexiv beleuchtet, **dadurch gekennzeichnet, dass** die Optik (18) und die zweite Optik (20) jeweils eine Abbildungsoptik ist, die Bildsensoren (8, 10, 12) durch einen einzigen Bildsensor (8) gebildet sind, wodurch für alle Codescheiben (2, 4, 6) der gemeinsame Bildsensor (8) vorgesehen ist und vor dem Bildsensor eine Blende angeordnet ist.

2. Drehwinkelsensor nach Anspruch 1, **dadurch gekennzeichnet, dass** weitere Codescheiben (6) vorgesehen sind, die jeweils mit einer vorhergehenden Codescheibe (2, 4) mit einer Übersetzung drehbar verbunden sind.

3. Drehwinkelsensor nach einem der vorhergehenden Ansprüche, **dadurch gekennzeichnet, dass** die Optiken (18, 20, 22) durch eine einzige Optik (18) gebildet sind, wodurch für alle Codescheiben (2, 4, 6) die gemeinsame Optik vorgesehen ist.

4. Drehwinkelsensor nach einem der vorhergehenden Ansprüche, **dadurch gekennzeichnet, dass** die Optik (18, 20, 22) refraktiv, diffraktiv oder reflektiv ausgebildet ist.

5. Drehwinkelsensor nach einem der vorhergehenden Ansprüche, **dadurch gekennzeichnet, dass** die Lichtquelle (16) kohärentes, inkohärentes oder teilkohärentes Licht aussendet.

6. Drehwinkelsensor nach einem der vorhergehenden Ansprüche, **dadurch gekennzeichnet, dass** die Lichtquelle (16) schmalbandig oder breitbandig bezüglich der ausgesendeten Wellenlänge ist.

7. Drehwinkelsensor nach einem der vorhergehenden Ansprüche, **dadurch gekennzeichnet, dass** der Lichtquelle (16) eine Strahlformungsoptik nachgelagert ist, welche refraktiv, diffraktiv oder reflexiv ausgebildet ist.

## Claims

1. An angle of rotation sensor comprising a rotatable first code disk (2); at least one first image sensor (8); and at least one optics (18) which images an optical code (14) of the code disk (2) onto the first image sensor (8), wherein at least one second rotating code disk (4) is provided which is directly or indirectly rotatably connected to the first code disk (2) with a transmission ratio; wherein an optical code (14) of the second code disk (4) is imaged onto a second image sensor (10) by means of a second optics (20); and wherein a light source (16) is arranged in a fixed position and reflectively illuminates the code disks (2, 4, 6), **characterized in that** the optics (18) and the second optics (20) are each imaging optics; **in that** the image sensors (8, 10, 12) are formed by a single image sensor (8), whereby the common image sensor (8) is provided for all code disks (2, 4, 6); and **in that** a diaphragm is arranged in front of the image sensor.

2. An angle of rotation sensor in accordance with claim 1, **characterized in that** further code disks (6) are provided which are each rotatably connected to a preceding code disk (2, 4) with a transmission ratio.

3. An angle of rotation sensor in accordance with one of the preceding claims, **characterized in that** the optics (18, 20, 22) are formed by a single optics (18), whereby the common optics is provided for all code disks (2, 4, 6).

4. An angle of rotation sensor in accordance with any one of the preceding claims, **characterized in that** the optics (18, 20, 22) is configured as refractive, diffractive or reflective.

5. An angle of rotation sensor in accordance with any one of the preceding claims, **characterized in that** the light source (16) transmits coherent light, incoherent light or partly coherent light.

6. An angle of rotation sensor in accordance with any one of the preceding claims, **characterized in that** the light source (16) is of a narrow band or broadband with respect to the transmitted wavelength.

7. An angle of rotation sensor in accordance with any one of the preceding claims, **characterized in that** a beam forming optics which is configured as refractive, diffractive or reflective is arranged downstream of the light source (16).

## Revendications

1. Capteur d'angle de rotation comprenant un premier disque codé rotatif (2), au moins un premier capteur d'image (8) et au moins un dispositif optique (18) qui forme l'image d'un code optique (14) du disque codé (2) sur le premier capteur d'image, dans lequel il est prévu au moins un second disque codé rotatif (4), qui est relié en rotation avec le premier disque codé (2) soit directement soit indirectement avec un une démultiplication, dans lequel l'image d'un code optique (14) du second disque codé (4) est formée au moyen d'un second dispositif optique (20) sur un second capteur d'image (10), dans lequel une source de lumière (16) est agencée stationnaire et éclaire les disques codés (2, 4, 6) par réflexion,
**caractérisé en ce que** le dispositif optique (18) et le second dispositif optique (20) sont respectivement un dispositif optique d'imagerie, les capteurs d'image (8, 10, 12) sont formés par un unique capteur d'image (8), grâce à quoi le capteur d'image commun (8) est prévu pour tous les disques codés (2, 4, 6) et un cache est agencé devant le capteur d'image.

2. Capteur d'angle de rotation selon la revendication 1, **caractérisé en ce qu'**il est prévu d'autres disques codés (6) qui sont reliés en rotation respectivement avec un disque codé précédent (2, 4) avec une démultiplication.

3. Capteur d'angle de rotation selon l'une des revendications précédentes, **caractérisé en ce que** les dispositifs optiques (18, 20, 22) sont formés par un unique dispositif optique (18), grâce à quoi le dispositif optique commun est prévu pour tous les disques codés (2, 4, 6).

4. Capteur d'angle de rotation selon l'une des revendications précédentes, **caractérisé en ce que** le dispositif optique (18, 20, 22) est réalisé de manière réfractive, diffractive ou réflective.

5. Capteur d'angle de rotation selon l'une des revendications précédentes, **caractérisé en ce que** la source de lumière (16) émet une lumière cohérente, incohérente ou partiellement cohérente.

6. Capteur d'angle de rotation selon l'une des revendications précédentes, **caractérisé en ce que** la source de lumière (16) est à large bande ou à bande étroite pour ce qui concerne les longueurs d'onde émises.

7. Capteur d'angle de rotation selon l'une des revendications précédentes, **caractérisé en ce que** la source de lumière (16) est suivie par un dispositif optique de formage de rayon, qui est réalisé de manière réfractive, diffractive ou réflexive.
